Europäisches Patentamt

European Patent Office

Office européen des brevets

(11) Numéro de publication: **0 176 394**

**A1**

(12) **DEMANDE DE BREVET EUROPEEN**

(21) Numéro de dépôt: **85401660.7**

(22) Date de dépôt: **20.08.85**

(51) Int. Cl.⁴: **B 62 D 3/12**

(30) Priorité: **04.09.84 FR 8413601**

(43) Date de publication de la demande:
**02.04.86 Bulletin 86/14**

(84) Etats contractants désignés:
**DE GB IT SE**

(71) Demandeur: **RENAULT VEHICULES INDUSTRIELS**
**Société Anonyme dite:**
**129 rue Servient "La Part Dieu"**
**F-69003 Lyon(FR)**

(72) Inventeur: **Guiavarch, Guy**
**Lot "Le Baronnat" No. 1**
**Valencin F-38540 Heyrieux(FR)**

(72) Inventeur: **Mounier-Poulat, François**
**"Les Baboulières"**
**F-38540 Heyrieux(FR)**

(74) Mandataire: **Ernst-Schonberg, Michel**
**R.N.U.R. S. 0804 B.P. 103 8 & 10, avenue Emile-Zola**
**F-92109 Boulogne Billancourt(FR)**

(54) **Mécanisme de direction à crémaillère pour véhicules automobiles.**

(57) Mécanisme de direction à crémaillère pour véhicules automobiles comprenant des moyens de commande de déplacement de la crémaillère (2) guidée dans un boitier de direction (3) et un ensemble de bielles de commande (40) des roues du véhicule fixées à un support (50) solidaire de la crémaillère (2) caractérisé par le fait que la crémaillère est rigidement reliée à un chariot coulissant (50) formant support porteur des bielles de direction (40) qui est monté en appui sur le boitier de direction (3) avec interposition de moyens de guidage (53, 53', 55, 55') portés par lesdits boitier (3) et chariot (50).

FIG.3

EP 0 176 394 A1

## MECANISME DE DIRECTION A CREMAILLERE POUR VEHICULES AUTOMOBILES

L'invention concerne un mécanisme de direction à crémaillère pour véhicules automobiles comprenant des moyens de commande de déplacement de la crémaillère guidée dans un boitier de direction et un ensemble de bielles de commande des roues du véhicule fixées à un support solidaire de la crémaillère.

De tels mécanismes posent cependant un certain nombre de problèmes lors de l'exploitation de ceux-ci sur des véhicules commerciaux tels que des camions et autocars du fait que les bielles de commande peuvent induire sur la crémaillère des efforts perpendiculaires à l'axe de celle-ci qui se traduisent par des déformations de flexion. Pour remédier à ce problème il s'avère nécessaire de surdimensionner la crémaillère mais on ne parvient pas à réduire pour autant les frottements au contact du cylindre et des paliers qui supportent la crémaillère. Une usure prématurée des surfaces de contact et une baisse du rendement énergétique du dispositif d'assistance éventuel s'ensuivent.

Pour remédier à cet inconvénient il est connu par la publication FRA 1135909 de monter les bielles de commande sur une barre coulissante supportée par des paliers indépendants tandisqu'un support fixe ladite barre de liaison à l'extrémité de la crémaillère. En conséquence la crémaillère ne reste soumise qu'à la poussée de son pignon de commande et elle est protégée contre les forces de réaction provenant des bielles agissant par poussée et traction. La publication FRA 2383056 enseigne l'application de la disposition précitée à un mécanisme de direction assistée selon lequel le piston de commande est monté sur la barre coulissante dans un cylindre séparé.

0176394

De tels mécanismes possèdent de ce fait des boitiers de direction logeant l'ensemble des paliers de la crémaillère et de la barre coulissante et sont de ce fait volumineux. De plus lorsque l'on désire utiliser des crémaillères courtes il est avantageux de fixer les bielles de direction sur une pièce liée à la crémaillère de sorte que celles-ci soient de même longueur et situées à proximité du plan longitudinal médian du véhicule tout en évitant les sollicitations inadmissibles de la crémaillère.

Par ailleurs lorsque le mécanisme de direction est associé à une commande assistée, la multiplicité des joints d'étanchéité au contact des éléments coulissants du mécanisme réduisent la fiabilité de celui-ci en augmentant les risques de fuite accidentels.

La présente invention a donc pour objet un mécanisme de direction qui remédie aux inconvénients précités en faisant application d'un moyen de support des efforts appliqués intégré au boitier de direction tout en autorisant un agencement de bielles de direction situées à proximité du plan longitudinal médian au véhivule.

Selon l'invention la crémaillère est rigidement reliée à un chariot coulissant porteur de bielles de direction monté en appui sur le boitier de direction avec interposition de moyens de guidage portés par lesdits boitier et chariot.

Selon une caractéristique de mécanisme le chemin de guidage est constitué par un ensemble de rainures situées sur le flanc du boitier de part et d'autre de son plan longitudinal médian. Au contact desquelles se déplacent des galets montés à rotation autour d'axes transversaux à l'axe longitudinal de la crémaillère qui sont supportés par des flasques constitutifs du chariot entretoisés par l'élément d'ancrage des bielles de direction.

Selon une variante de réalisation, le chemin de guidage est constitué par un ensemble de barres fixées latéralement au boitier sur lesquelles est monté à coulissement le chariot comportant des oreilles de guidage.

... / ...

L'écartement longitudinal des axes des galets ou des oreilles de guidage sera choisi supérieur à l'écartement des éléments d'ancrage des bielles pour assurer le maximum de stabilité au chariot.

L'équipage mobile constitué ainsi par le chariot, ses moyens de guidage et par les ancrages des bielles de direction peut être monté à l'extérieur du boitier de direction et possède une grande rigidité en flexion et torsion. Les ancrages des bielles de direction pourront donc porter des éléments de rotule qui faciliteront les modifications d'orientation des bielles pour la conservation d'une épure de direction correcte pour toutes les positions des roues au cours de l'évolution du véhicule sur son site de travail ou de transport.

L'invention ainsi réalisée est applicable au mécanisme de direction à crémaillère associée ou non à un dispositif d'assistance. On décrira toutefois à titre d'exemple illustrant l'invention un mécanisme de direction dans lequel l'effort d'assistance est procuré par un vérin d'assistance à deux pistons montés en tandem dans le but de réaliser aisément une commande d'assistance à double circuit dont la sécurité est augmentée en cas de panne de l'un des circuits.

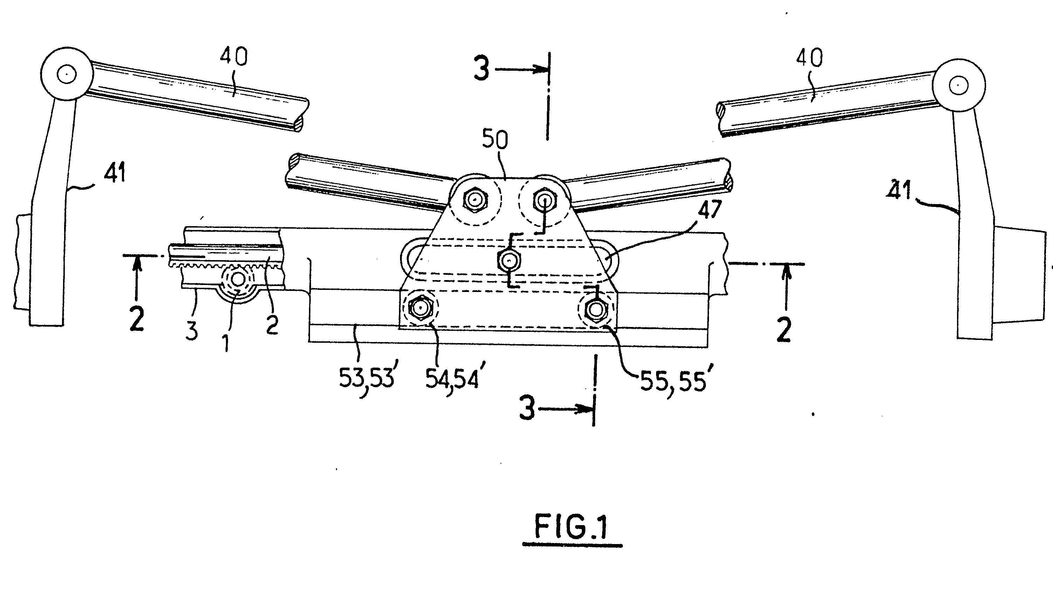

D'autres caractéristiques et avantages du mécanisme ressortiront de la description qui va suivre en référence au dessin annexé dans lequel la figure 1 est une représentation schématique partielle d'un mécanisme de direction assistée utilisant les dispositions constructives de l'invention.

La figure 2 est une vue en coupe longitudinale du boitier de direction selon la ligne 2-2 de la figure 1 ou 4.

La figure 2A représente un détail de réalisation A de la figure 2.

La figure 3 est une vue en coupe transversale à une plus grande échelle du boitier du mécanisme selon la ligne 3-3 de la figure 1.

La figure 4 est une représentation schématique partielle d'une variante de réalisation du mécanisme.

La figure 5 est une vue en coupe transversale du boitier du mécanisme selon la ligne 5-5 de la figure 4.

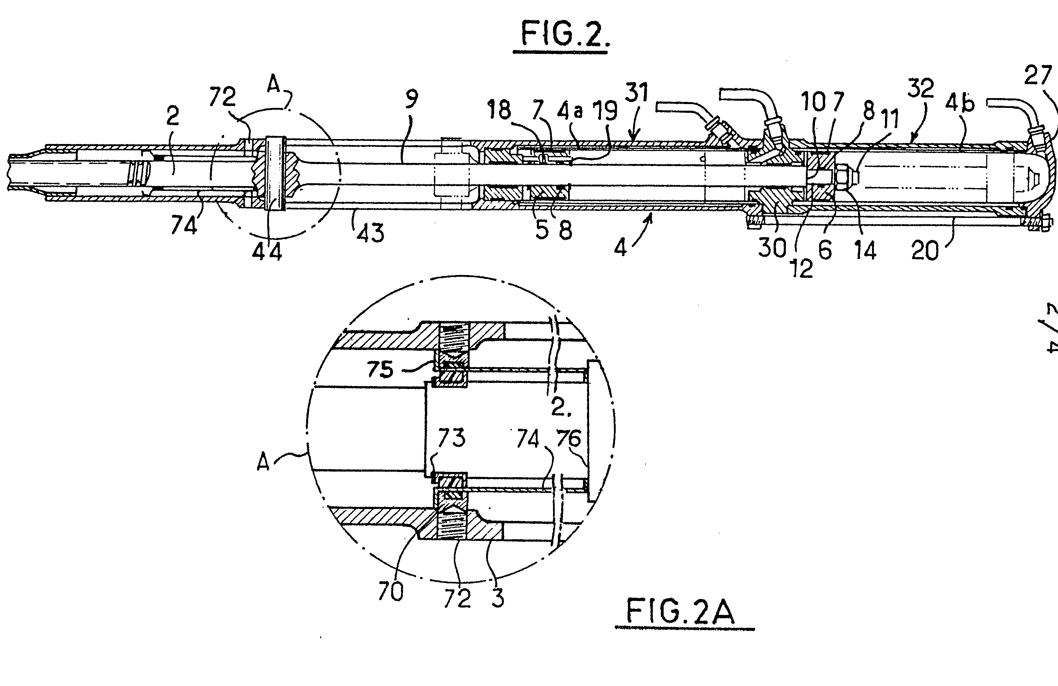

La figure 1 et 2 montre un mécanisme de direction comprenant par exemple un pignon 1 qui commande le déplacement d'une barre de crémaillère 2 guidée dans un boitier de direction 3 qui est prolongé axialement par un cylindre d'assistance 4 dans lequel sont mobiles à déplacement axial des pistons 5, 6 dans un fourreau monté dans le cylindre 4, sous l'effet d'une pression hydraulique, pour permettre un mouvement de coulissement dans le fourreau et la transmission d'un effort de poussée sur la barre de crémaillère 2.

Les pistons 5, 6 dans chacun desquels sont logés des segments 7 et des joints d'étanchéités d'arbre 8 sont respectivement montés sur l'extrémité de la barre de crémaillère 2 formant une tige de commande 9. A cet effet la barre 2 qui possède un épaulement d'extrémité 10 se prolonge axialement par un embout fileté 11 qui possède une portée lisse 12 qui forme la surface de contact étanche avec le piston 6 portant le joint 8. L'embout 11 reçoit en écrou d'immobilisation 14 du piston 6 contre l'épaulement 10. Le piston 5 est immobilisé axialement au moyen d'anneaux d'arrêt sur la barre 2.

Le corps du piston 5 constitue en outre le logement d'une soupape 18 commandée par des poussoirs 19 débouchant au contact des faces latérales opposées du piston qui commandent l'ouverture de la soupape lorsque le piston 5 arrive à proximité de l'un ou l'autre des fonds du cylindre ce qui provoque la mise en communication des chambres du cylindre situées de part et d'autre de ce piston.

Il est bien évident que d'autres moyens d'immobilisation axiale des pistons 5, 6 pourraient être immaginés tous à la portée de l'homme de l'art qui en fera le choix technologique.

Les pistons 5, 6 sont montés dans le cylindre 4 en deux parties 4a et 4b qui possède deux enveloppes intérieures cylindriques formant fourreau immobilisés axialement entre les fonds de cylindre.

A titre d'exemple le fourreau du piston 6 est immobilisé axialement entre une cloison intérieure étanche 30 qui sépare les parties 4a, 4b et un bouchon 27 monté ne façon étanche avec interposition de points d'étanchéité à l'extrémité de la partie 4b du cylindre. Le bouchon 27 est immobilisé axialement au moyen de tirants 20 constitués par des tiges filetées vissées dans la partie 4a du cylindre ainsi que montré à la figure 2.

Le bouchon 27, le cylindre 4 et la cloison 30 possède respectivement des orifices d'entrée de fluide qui permettent la mise en pression du fluide au contact des faces des pistons 5, 6. La cloison étanche 30 au travers de laquelle s'étend la tige 9 délimite respectivement deux sections de cylindre 31, 32 dans lesquelles se déplacent les pistons 5, 6.

Le montage précité permet de la sorte la réalisation d'un vérin d'assistance à double effet dans lequel les pistons 5, 6 sont montés en tandem et la disposition des orifices de mise en pression des diverses faces des pistons assure la réalisation d'un double circuit d'assistance à sécurité augmentée.

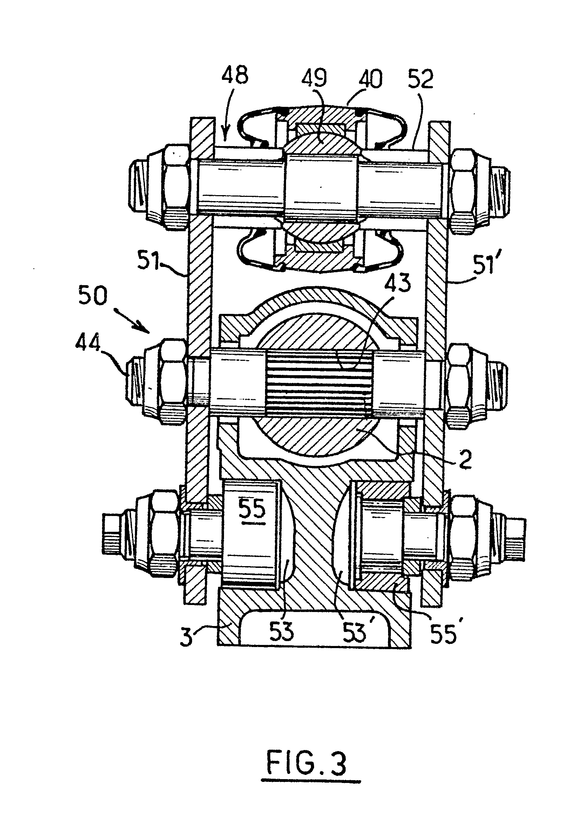

On décrira maintenant en référence des figures 1 et 3 le mécanisme d'entrainement des deux bielles de direction 40, qui assurent la transmission du mouvement de la crémaillère 2 aux portes-fusées 41 qui commandent le braquage des roues du véhicule.

Les bielles de direction 40 sont fixées à un support 50 représenté plus en détail à la figure 3.

La crémaillère 2 possède une partie cylindrique lisse qui est percée transversalement et offre de cette manière un orifice de passage à cannelures 43 à une tige de commande 44.

La tige 44 s'étend au travers du boitier de direction 3 dont les faces latérales opposées portent des rainures de guidage 47 dont la longueur correspond à la course longitudinal de la crémaillère 2.

La tige 44 sert d'entretoise à deux flasques 51, 51' entre lesquels sont montés les ancrages 48 des bielles de direction 40. Chaque ancrage 48 représenté à la figure 3 est constitué par un axe à extrémités filetées qui possède une portée cylindrique médiane sur laquelle est monté un manchon sphérique 49 formant portée de rotule à la bielle 40 et deux portées cylindriques latérales qui reçoivent des entretoises 52 des flasques 51, 51'.

Le support 50 défini notamment par ses flasques 51, 51' et par les ancrages 48 constitue un chariot monté à déplacement longitudinal le long des rainures 47 du boitier de direction 3.

Entre le support 50 et le boitier 3 sont disposés de façon générale des moyens de guidage convenable dont les éléments sont associés respectivement au boitier 3 et aux flasques 51, 51'.

Selon la figure 3, les moyens de guidage sont constitués d'une part par deux rainures parallèles 53, 53' situées sur les flancs opposés du boitier de direction 3 dont la longueur est égale à la longueur du déplacement de la crémaillère 2.

Dans les rainures 53, 53' sont montés à déplacement des organes de roulement constitués dans le cas présent par des galets 54, 55, 54', 55' dont l'écartement longitudinal est sensiblement plus important que celui des ancrages 48 des bielles 40 dans le but de conférer au chariot la stabilité souhaitée. Chacun des galets 54, 55, 54', 55' est monté à rotation sur un axe orthogonal à l'axe longitudinal de la crémaillère fixé sur le flasque correspondant 51, ou 51'.

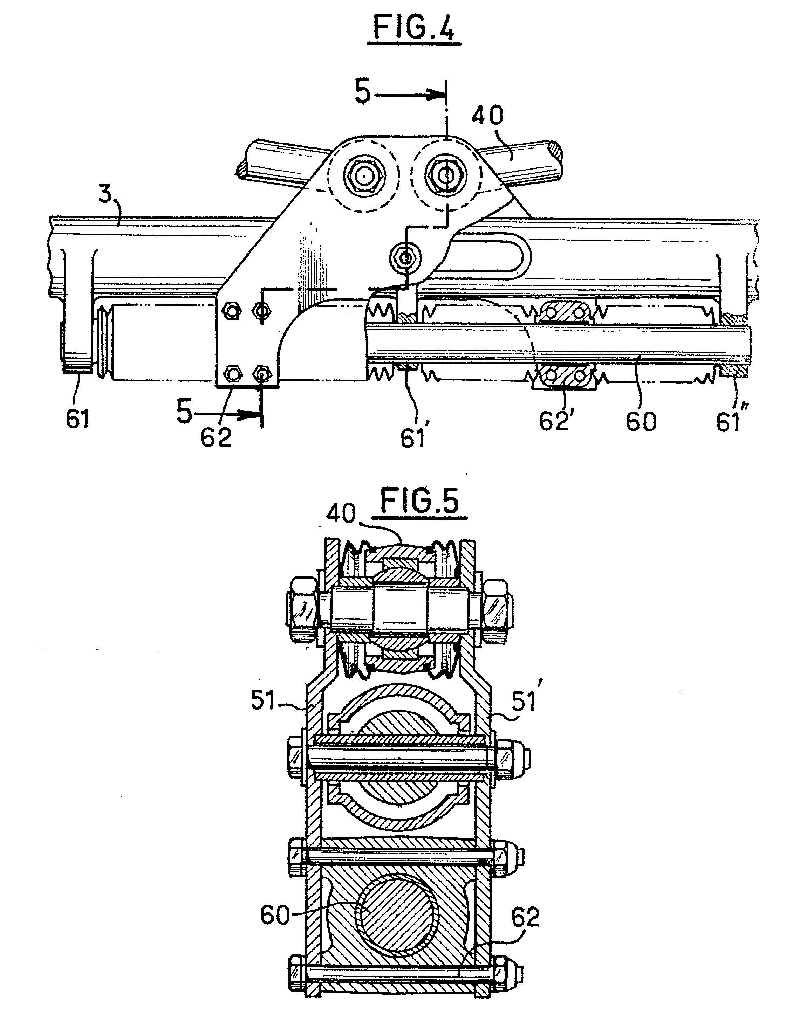

A titre de variante de réalisation représentée à la figure 4 et 5, les rainures 53, 53' peuvent être remplacées par un chemin ou barre de guidage 60 de section appropriée immobilisés dans des oreilles latérales 61, 61' formant chapes situées sur le boitier. Sur le barreau 60, est monté à déplacement le chariot 50 par l'intermédiaire de paliers coulissants 62, 62' qui selon des réalisations en soi connue peuvent être le cas échéant des paliers à circulation de billes ou lisses.

Le détail A de la figure 2 illustre en outre le dispositif d'étanchéité entre le boitier de direction 3 et la crémaillère 2. Un segment d'étanchéité 70 est immobilisé au moyen de vis pointeau 72 dans le boitier 3, tandis qu'un autre segment d'étanchéité 71 est immobilisé sur la barre de crémaillère 2 par au moins un anneau d'arrêt 73. Entre les segments 70, 71 est disposé une portée d'étanchéité mobile 74 qui possède un épaulement d'entrainement 75 radial orthogonal à l'axe de la barre de crémaillère 2 et respectivement en appui axial externe contre un épaulement 76 de ladite barre lorsque la crémaillère se déplace vers la gauche de la figure 2 et en appui axial interne contre le segment 70 lorsque la crémaillère se déplace vers la droite de la figure 2.

... / ...

REVENDICATIONS

1. Mécanisme de direction à crémaillère pour véhicules automobiles comprenant des moyens de commande (1) de déplacement de la crémaillère (2) guidée dans un boîtier de direction (3) et un ensemble de bielles de commande (40) des roues du véhicule fixées à un chariot support (50) monté en appui sur le boîtier de direction (3) avec interposition de moyens de guidage (53, 53' - 54, 55, 54', 55' - 60, 62, 62') portés par lesdits boîtier (3) et chariot (50), caractérisé par le fait que la crémaillère est rigidement reliée au chariot coulissant (50) formant support porteur des bielles de direction (40) et que les moyens de guidage sont constitués par un ensemble de rainures (53, 53') situées sur les flancs opposés du boîtier de direction (3) au contact desquelles se déplacent des organes de roulement (54, 55, 54', 55') montés à rotation autour d'axes orthogonaux à l'axe longitudinal de la crémaillère (2) portés par le chariot.

2. Mécanisme selon la revendication 1, caractérisé par le fait que les moyens de guidage sont constitués par un chemin (60) rapporté sur le flanc du boîtier de direction (3) au contact duquel se déplacent à coulissement des paliers de guidage (62, 62') portés par le chariot (50).

3. Mécanisme selon l'une quelconque des revendications 1 ou 2, caractérisé par le fait que l'écartement longitudinal des organes de guidage (54, 55, 54', 55', 62, 62') liés au chariot (50) est supérieur à l'écartement des ancrages (48) support des bielles (40).

4. Mécanisme selon l'une quelconque des revendications 1 à 4, caractérisé par le fait que le chariot (50) est constitué par un ensemble de deux flasques (51, 51') entretoisés notamment par l'ancrage (48) des bielles de direction (40).

**FIG.1**

1/4

0176394

0176394

FIG.2.

FIG.2A

FIG.3

0176394

# FIG.4

# FIG.5

Office européen
des brevets

**RAPPORT DE RECHERCHE EUROPEENNE**

0176394
Numéro de la demande

EP 85 40 1660

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | DE-C- 659 522 (HÖRTZSCH) <br> * En entier * | 1 | B 62 D 3/12 |
| A | FR-A-1 345 066 (CITROEN) <br> * En entier * | 1 | |
| A | DE-A-3 118 254 (Z.F.) <br> * En entier * | 1 | |
| A | FR-A-1 031 598 (CAM GEARS) <br> * En entier * | 1 | |
| A | FR-A-2 317 565 (CAM GEARS) <br> * En entier * | 1 | |
| A | GB-A- 971 490 (ALFORD) | | DOMAINES TECHNIQUES RECHERCHES (Int. Cl.4) |
| A,D | FR-A-1 135 909 (FERGUSON) | | B 62 D |
| A | DE-A-1 946 480 (V.E.B.) | | |
| A,D | FR-A-2 382 056 (ADWEST) | | |

Le present rapport de recherche a été etabli pour toutes les revendications

| Lieu de la recherche <br> LA HAYE | Date d achevement de la recherche <br> 28-11-1985 | Examinateur <br> PIRIOU J.C. |
|---|---|---|